# DEMANDE DE BREVET EUROPEEN

(11) **EP 0 871 313 A1**
(43) Date de publication de la demande: **14.10.1998**
(21) Numéro de dépôt: 98201045.6
(22) Date de dépôt: 02.04.1998
(51) Int. Cl.: H04M 1/03, H04M 1/02

(54) **Appareil de communication, notamment de type téléphonique utilisant un conduit acoustique pour relier un microphone à l'extérieur du boîtier**

(30) Priorité: 11.04.1997 FR 9704455
(71) Demandeur: Koninklijke Philips Electronics N.V., 5621 BA Eindhoven (NL)
(72) Inventeur: Collin, Pascal, 75008 Paris (FR); Leterrier, Guillaume, 758008 Paris (FR)
(74) Mandataire: Landousy, Christian

(57) **Abrégé**

L'invention concerne un appareil de communication comprenant, notamment, un clavier de fonctions à touches et un microphone relié à l'extérieur du boîtier de l'appareil par l'intermédiaire d'un conduit acoustique s'ouvrant vers l'extérieur de l'appareil en traversant l'une des touches du clavier, le microphone (27) étant logé soit à l'intérieur de ladite touche (21), soit dans une autre zone quelconque à l'intérieur de l'appareil, tout en étant alors relié audit conduit par un canal acoustique.
Application : appareils téléphoniques portables.

## Description

La présente invention concerne un appareil de communication comprenant notamment un clavier de fonctions à touches et un microphone relié à l'extérieur du boîtier de l'appareil par l'intermédiaire d'un conduit acoustique. L'invention est applicable en particulier dans les appareils téléphoniques.

La demande de brevet japonais n° 08065367A, déposée le 16 août 1994 et publiée le 8 mars 1996, décrit un appareil téléphonique comprenant, notamment, un clavier de numérotation à touches, accessible à l'extérieur du boîtier de l'appareil, et un microphone. Ce dernier est logé dans le boîtier de l'appareil, à l'extrémité de celui-ci opposée à celle de l'écouteur, et un court conduit acoustique traverse la paroi de ce boîtier pour le guidage des paroles des interlocuteurs vers le microphone. Bien que l'emplacement choisi pour le microphone soit celui qui semble convenir pour son usage, il utilise cependant une place non négligeable, d'autant plus que, dans la réalisation décrite dans le document cité, au microphone sont associés un témoin lumineux ainsi que différentes connexions et un couvercle mobile.

Le but de l'invention est de proposer une solution originale pour parvenir au contraire à réduire les dimensions d'appareils téléphoniques tel que celui décrit ci-dessus.

A cet effet l'invention concerne un appareil téléphonique tel que décrit dans le préambule de la description et qui est en outre caractérisé en ce que ledit conduit acoustique s'ouvre vers l'extérieur de l'appareil en traversant l'une des touches de numérotation du clavier.

La structure ainsi proposée, applicable dès lors qu'un microphone est présent sur un produit comportant un clavier de fonctions, permet, en intégrant ainsi ce microphone dans une touche existante de numérotation du clavier, de réduire notablement la longueur du boîtier de l'appareil et, de ce fait, également son volume. Ce mode de réalisation peut en outre diminuer le prix de revient de l'appareil.

Selon un mode particulier de réalisation, le microphone est logé à l'intérieur de cette touche comprenant le conduit acoustique. Selon un autre mode de réalisation correspondant à une mise en place déportée du microphone, ce dernier est au contraire logé dans une zone quelconque à l'intérieur de l'appareil, un canal acoustique étant associé audit conduit pour assurer la continuité de la liaison acoustique jusqu'au microphone. Dans l'un ou l'autre cas, la touche comprenant le conduit acoustique est, avantageusement (pour raison de symétrie), l'une de celles qui sont situées au voisinage de l'axe longitudinal de l'appareil, ce qui supprime tout problème de sensibilité acoustique différente pour les droitiers et les gauchers. Parmi les touches ainsi situées, la touche concernée est de préférence celle située le plus près de l'extrémité du boîtier, en général la touche "0" sur les claviers téléphoniques tels qu'ils sont actuellement standardisés.

Les particularités et avantages de l'invention apparaîtront maintenant de façon plus détaillée dans la description qui suit et dans les dessins annexés, donnés à titre d'exemples non limitatifs et dans lesquels :
- la figure 1 montre un exemple d'appareil téléphonique portable dans lequel l'invention peut être utilisée ;
- la figure 2 est une vue en coupe d'une partie du boîtier d'un appareil téléphonique, illustrant un exemple de mise en oeuvre de l'invention ;
- la figure 3 est une vue en coupe similaire, correspondant à une variante de mise en oeuvre de l'invention.

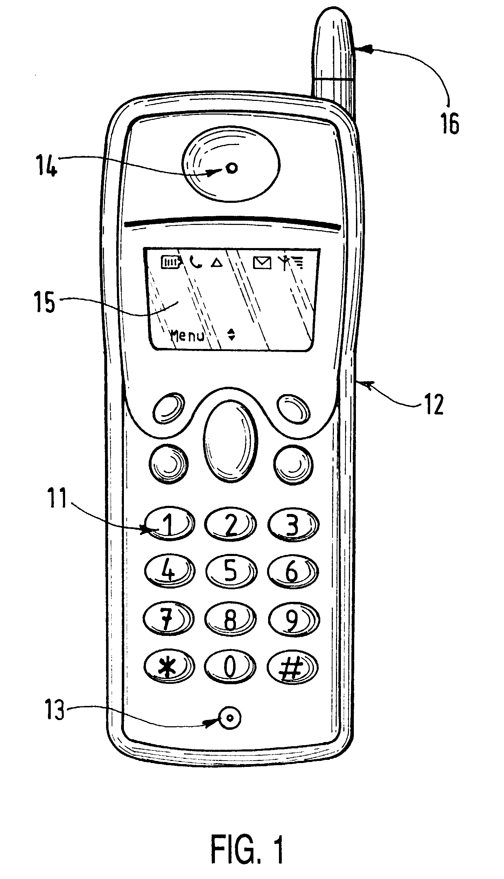

La figure 1 correspond au cas où l'invention, quoique de portée plus générale dans son application, est utilisée dans un appareil téléphonique portable. Sur l'appareil représenté apparaissent notamment un clavier touches 11, présent sur une des faces de l'appareil et orienté vers l'extérieur du boîtier 12 de cet appareil, et un microphone. Plus exactement, le microphone est à l'intérieur du boîtier 12, et donc non visible, mais il est relié à l'extérieur de l'appareil par l'intermédiaire d'un conduit acoustique 13. Par conduit, on entend ici toute ouverture, plus ou moins longue, ou au contraire très courte (aussi courte soit-elle), offrant un passage spécifique aux sons destinés à être reçus par le microphone, que celui-ci se trouve tout de suite à l'extrémité du conduit ou, au contraire, déporté plus loin, en une position quelconque à l'intérieur de l'appareil, par exemple à l'extrémité d'un canal acoustique assurant le relais entre le conduit acoustique et le microphone. Parmi les principales touches représentées, sont présentes bien entendu les douze touches habituelles 1 à 9, 0, * et #. L'appareil inclut également, comme éléments visibles sur la figure 1, un écouteur 14, un écran 15 et une antenne 16.

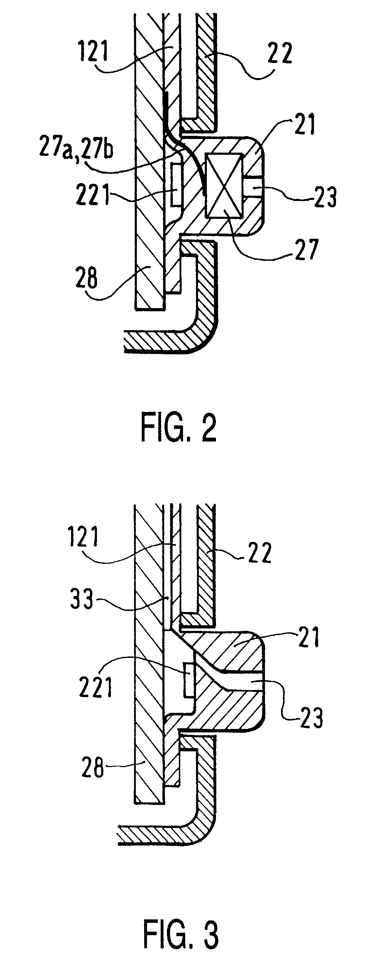

Conformément à l'invention, et comme le montre la vue en coupe de la figure 2, un gain notable de place est obtenu en plaçant le microphone non plus dans l'espace situé entre les touches du clavier et l'extrémité inférieure du boîtier, mais de telle manière que le conduit acoustique, désigné maintenant par la référence 23, s'ouvre vers l'extérieur du boîtier 22 de l'appareil en traversant une touche de numérotation du clavier, ici référencée 21. Pour des raisons de symétrie et que le produit puisse s'adresser aussi bien aux gauchers qu'aux droitiers, le choix de la touche se porte plutôt sur l'une de celles situées le long de l'axe longitudinal du boîtier de l'appareil (les touches 2, 5, 8, 0 sur les claviers actuels), avec une préférence (c'est la solution représentée sur la figure 2) pour celle qui est la plus proche de l'extrémité du boîtier (en général, la touche 0). Le microphone 27 est situé dans la touche 21. D'un côté du microphone, le conduit 23 relie celui-ci au milieu extérieur au boîtier 22, pour y capter les sons émis, tandis que, de l'autre côté, vers l'intérieur du boîtier, deux connexions 27a, 27b relient électriquement le microphone à une carte de circuit imprimé 28.

Dans une variante de réalisation représentée sur la figure 3, le microphone n'est plus logé dans la touche 21, mais déporté plus loin, à distance des touches, dans une autre zone quelconque disponible à l'intérieur du boîtier 22 de l'appareil. Un canal 33 est alors prévu dans le prolongement du conduit 23 pour assurer la continuité de la liaison acoustique jusqu'au microphone (non représenté), par un guidage des ondes sonores provenant de l'extérieur. Ce canal 33 consiste par exemple en un évidement longeant la face du circuit imprimé qui est orientée vers le clavier et dont l'ouverture, dans l'évidement arrière de la touche, est en regard de celle du conduit 23. Le microphone, même ainsi déporté, reste bien entendu relié à la carte de circuit imprimé 28 par une paire de conducteurs électriques (également non représentés).

Quelle que soit la variante représentée, le clavier reste, lui, réalisé ici de la façon suivante. Il comprend en général une membrane élastomère 121 (voir par exemple la figure 2), plane mais sur laquelle sont rapportées, en ne faisant qu'une seule et même pièce avec elle, les diverses touches (la touche 21 et toutes les autres touches, quel que soit leur nombre et leur disposition, éventuellement différente selon l'application : appareil téléphonique, interphone, etc...). Cette membrane 121 est prévue pour être fixée ou rapportée sur le circuit imprimé 28 comportant tous les éléments de contact et les pistes conductrices nécessaires.

Comme le montre la figure 2 (ou la figure 3), chaque touche (21, ou autre) de la membrane élastomère comprend un contact électrique 221, par exemple en carbone, sérigraphié sur le fond d'un évidement prévu dans la touche. Ce contact est destiné à venir en liaison avec une piste ou zone conductrice sur le circuit imprimé 28, lorsqu'une pression de l'utilisateur est exercée sur la touche concernée. La nature de la substance élastomère et la forme des touches sont étudiées de façon que, lorsque ladite pression est relâchée, chaque touche revienne dans sa position de repos (telle que représentée).

## Revendications

1. Appareil de communication comprenant notamment un clavier de fonctions à touches et un microphone relié à l'extérieur du boîtier de l'appareil par l'intermédiaire d'un conduit acoustique, caractérisé en ce que ledit conduit acoustique s'ouvre vers l'extérieur de l'appareil en traversant l'une des touches de numérotation du clavier.

2. Appareil selon la revendication 1, caractérisé en ce que le microphone est logé à l'intérieur de ladite touche comprenant le conduit acoustique.

3. Appareil selon la revendication 1, caractérisé en ce que le microphone est logé dans une zone quelconque à l'intérieur de l'appareil, un canal acoustique étant associé audit conduit pour assurer la continuité de la liaison acoustique jusqu'au microphone.

4. Appareil selon l'une des revendications 2 et 3, caractérisé en ce que ladite touche comprenant le conduit acoustique est l'une des touches situées au voisinage de l'axe longitudinal de l'appareil.

5. Appareil selon la revendication 4, caractérisé en ce que, parmi ces touches situées dans l'axe longitudinal, ladite touche comprenant le conduit acoustique est celle située le plus près de l'extrémité du boîtier.

6. Appareil téléphonique comprenant au moins un clavier à touches ainsi qu'un microphone en liaison acoustique avec l'extérieur du boîtier de l'appareil par l'intermédiaire d'au moins un conduit acoustique, caractérisé en ce que ledit conduit traverse l'une des touches de numérotation du clavier.
